# DEMANDE DE BREVET EUROPEEN

(11) **EP 1 746 305 A2**
(43) Date de publication de la demande: **24.01.2007**
(21) Numéro de dépôt: 06300778.5
(22) Date de dépôt: 07.07.2006
(51) Int. Cl.: F16F 15/315, F16F 15/12

(54) **Volant moteur à tôle flexible et procédé de fabrication**

(30) Priorité: 21.07.2005 FR 0552264
(71) Demandeur: Renault, 92109 Boulogne Billancourt (FR)
(72) Inventeur: Frère, Xavier, 92360 Meudon La Forêt (FR); Pionnier, Robert, 94000 Creteil (FR)
(74) Mandataire: Rougemont, Bernard

(57) **Abrégé**

Volant d'inertie (8) de moteur à combust ion interne assurant la liaison mécanique entre le vilebrequin (2) du mot eur et l'embrayage d'ent rée de la transmission accouplée à celui-ci, caractérisé en ce qu'il comprend une tôle (9) circulaire insérée à la coulée dans l'ouverture centrale (10) d'une couronne en fonte (5).

## Description

La présente invention se rapporte à la liaison mécanique entre un mot eur à combust ion interne, et la transmission accouplée à celui-ci.

Plus précisément, elle concerne un volant d'inertie de moteur à combustion interne, assurant la liaison mécanique entre le vilebrequin du moteur et l'embrayage d'entrée de la transmission accouplée à celui-ci, et le procédé de fabrication d'un tel volant.

Les volants moteurs sont généralement constitués d'un bloc de fonte rigide, fixé en extrémité du vilebrequin, en vue d'étouffer les acyclismes du moteur en amont de la transmission.

Lors de la redescente des pistons, après les phases d'explosion du moteur, le volant subit des contraintes en torsion et en flexion, qui agissent directement sur le palier du vilebrequin.

Pour réduire la raideur en flexion d'un volant d'inertie rigide, il est possible de réaliser des ajours sur son plateau de fixation, de manière à introduire une différence de fréquence propre entre les oscillations se développant dans le plan de symétrie du vilebrequin, et dans un plan orthogonal à celui-ci. Toutefois, ces ajours ont un impact négatif sur la tenue mécanique du volant, avec risque de rupture, en raison des contraintes mécaniques très élevées qu'il subit, notamment sous fortes accélérations, ou lors de l'arrêt brutal du moteur.

Il existe aussi des volants d'inertie flexibles, ou volants souples, qui permettent en particulier d'atténuer la flexion du tourillon de vilebrequin, lors de la redescente des pistons après les explosions. Les volants souples ont des performances supérieures à celles des volants rigides. Cependant leur structure, plus complexe que celle des volants rigides, induit forcément des coûts de fabrication plus élevés.

La présente invention vise à réaliser un volant moteur de type nouveau, ayant les performances d'un volant souple pour sa faible raideur en flexion, tout en conservant un coût de fabrication réduit.

Dans ce but, elle propose que le volant comprenne une tôle circulaire insérée à la coulée dans l'ouverture centrale d'une couronne en fonte.

De préférence, le volant comprend également un plateau de fixation sur le vilebrequin, soudé sur la tôle avant l'insertion de celle-ci dans la fonte.

Conformément à l'invention, la fabrication du volant inclut les étapes suivant es :
- réalisation de la tôle emboutie,
- soudage sur la tôle, du plateau de fixation du volant,
- insertion de l'ensemble tôle et plateau soudés, dans le moule du volant,
- coulée du volant, et
- usinage.

D'autres caractéristiques et avantages de la présente invention apparaîtront clairement à la lecture de la description suivante d'un mode de réalisation particulier de celle-ci, en se reportant aux dessins annexés, sur lesquels :
- la figure 1 met en évidence le plan de symétrie du vilebrequin,
- les figure 2 et 3 montrent un premier mode de réalisation, et
- les figures 4 et 5 montrent un second mode de réalisation de l'invention.

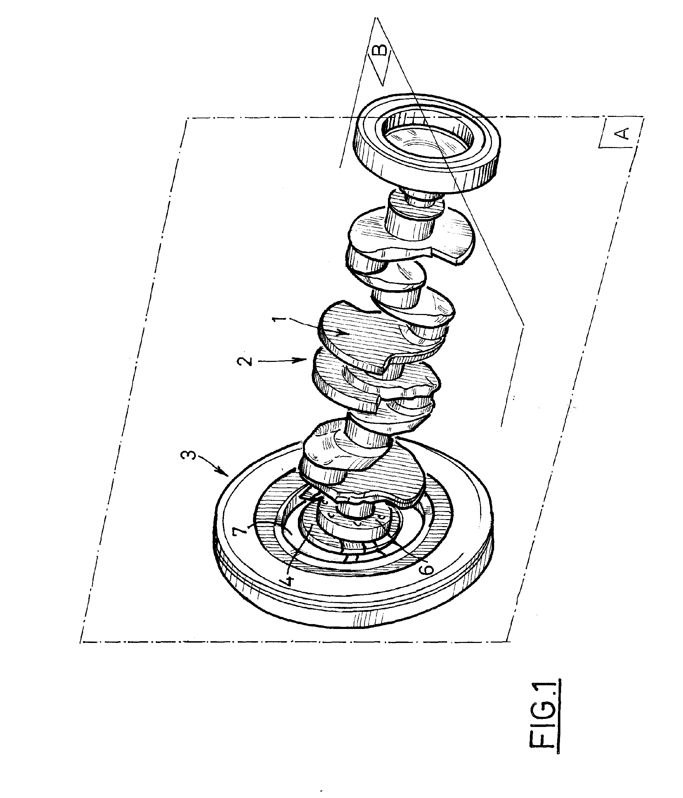

Sur la figure 1, on distingue les manetons 1 d'un vilebrequin 2 de moteur à combustion interne, accouplé à un volant d'inertie 3, ajouré au niveau de son plateau de fixation 4 sur le tourillon 6 du vilebrequin 2. Le plan de symétrie A, du vilebrequin, passe par les manetons 1 de celui-ci. Le plan B est perpendiculaire au plan A. En réponse aux déplacements des pistons dans les cylindres et aux acyclismes du vilebrequin, le volant moteur fléchit. Pour réduire la raideur en flexion du volant d'inert ie, on a découpé des aj ours 7 dans la masse du volant 3.

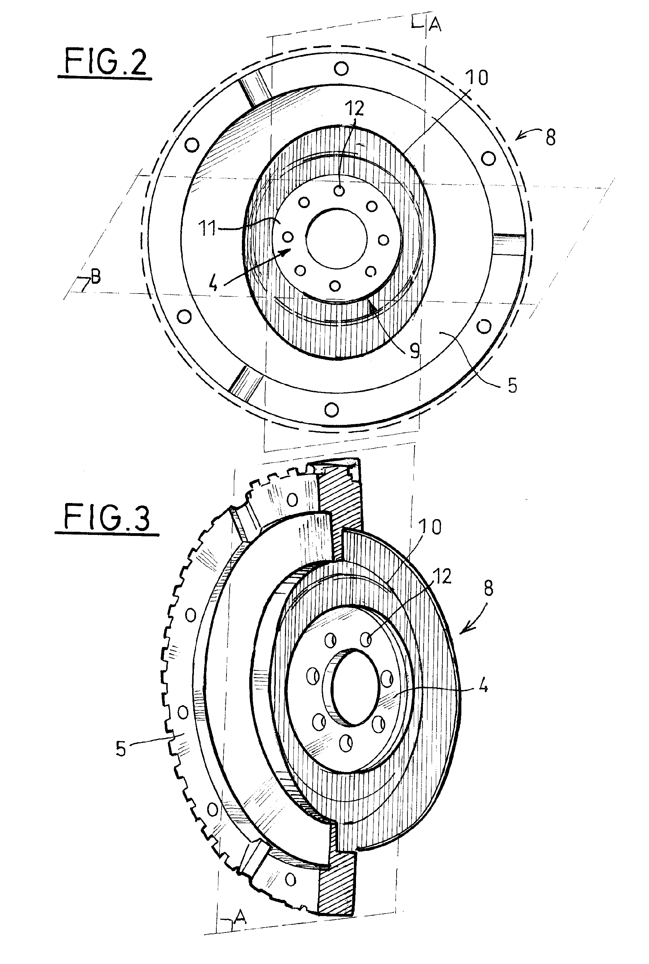

Le vol ant moteur 8 objet de l'invention, illustré de façon non limitative par les figures 2 à 5, comprend une tôle 9, insérée à la coulée dans le moule de fonderie du volant. La présence de cette tôle souple dans la couronne en fonte rigide 5 du volant, permet d'éviter sa rupture lors de sollicitations importantes en flexion et en torsion. La tôle 9 se présente comme une simple assiette. Elle est embout ie sans difficulté particulière, et l'insertion à la coulée est aussi une opération bien maîtrisée. La fabrication du volant comprend essentiellement les opérations suivantes :
- réalisation de la tôle emboutie 9,
- soudage sur la tôle 9, du plateau de fixation 4,
- insert ion de l'ensemble tôle et plateau soudé dans le moule du volant,
- coulée du volant, et
- usinage.

Avant son insertion, la tôle flexible 9 reçoit par soudure un plateau de fixation 4 du volant sur le vilebrequin. Comme indiqué plus haut, lors de la redescente des pistons, après l'explosion, le volant subit des contraintes de torsion et de flexion, qui agissent directement sur le palier du vilebrequin. La souplesse introduite par l'élément flexible 9 dans le volant 8 permet de réduire la raideur en flexion de celui-ci. Grâce à la tôle flexible 9 insérée à la coulée le volant comportement du volant d'inertie proposé par l'invention, se rapproche de celui d'un volant souple.

Conformément aux figures 2 et 3, l'invention propose également de limiter l'impact des contraintes subies par le volant en donnant à la couronne en fonte 5, une ouverture 10 de forme elliptique. La zone du petit foyer 11 de l'ellipse, est plus rigide que celle du grand foyer 12. L'ouverture elliptique prive le volant de sa symétrie de révolution, et permet de créer une dif f érence de fréquence propre entre les oscillations développées dans le plan de symétrie A du vilebrequin et celle qui sont développées dans le plan perpendiculaire B. Cette différence permet de rendre le volant plus souple dans le plan A, que dans le plan B, si on centre la zone du grand foyer 12, sur le plan A et la zone du petit foyer 11 sur le plan B.

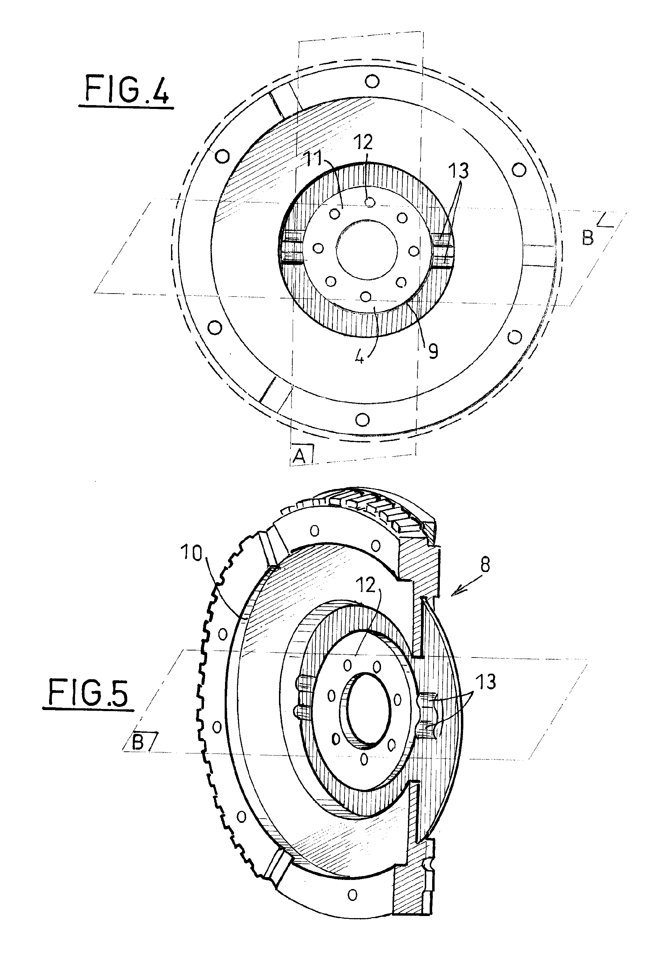

Dans la variante des figures 4 et 5, l'ouverture 10 de la couronne 5 n'est pas elliptique, mais circulaire. On constate par ailleurs la présence de nervures 13 sur la tôle 9. Les nervures 13, obtenues par exemple par embout issage, ont le même effet que l'ouverture elliptique du premier mode de réalisat ion, à savoir créer une différence de fréquence propre entre le plan de symétrie du vilebrequin A, et le plan B perpendiculaire à celui-ci. En disposant les nervures 13 au niveau du plan perpendiculaire B, on rigidifie les secteurs correspondants. Le volant 8 est ainsi plus souple autour du plan de symétrie A du vilebrequin. Le procédé de fabrication de ce volant est similaire à celui du premier mode de réalisation, étant donné que les nervures 13 peuvent être mises en forme au cours de l'opération d'emboutissage.

En conclusion, le volant mot eur proposé présente l'efficacité d'un volant souple pour la réduction de raideur obtenue par rapport à un volant rigide. Cette efficacité particulière est obtenue grâce à un effet combiné de la flexibilité introduite par la tôle centrale dans la masse de fonte et des dispositions additionnelles d'ouverture elliptique ou de nervures de rigidification. La tôle flexible évite les risques de rupture liés aux découpes dans la partie rigide d'un volant. On obtient donc un résultat identique à celui d'un volant souple pour un coût de fabrication beaucoup plus réduit. Latôle doit seulement conserver une raideur suffisante pour éviter d'être trop souple, et d'avoir des débattements trop importants. Enfin, il faut porter un soin particulier à la liaison entre latôle et la f ont e, durant la coulée du volant.

## Revendications

1. Volant d'inertie (8) de moteur à combustion interne assurant la liaison mécanique entre le vilebrequin (2) du mot eur et l'embrayage d'entrée de la transmission accouplée à celui-ci, comprenant une tôle (9) circulaire insérée à la coulée dans l'ouverture centrale (10) d'une couronne en fonte (5), et un plateau de fixation (4) sur le vilebrequin (2), soudé sur la tôle (9) avant l'insertion de celle-ci, **caractérisé en ce que** la couronne (5) est plus souple dans le plan de symét rie (A) du vilebrequin (2), que dans un plan (B) perpendiculaire à celui-ci.

2. Volant d'inertie selon la revendication 1, **caractérisé en ce que** l'ouvert ure (10) de la cour onne (5) a une forme elliptique.

3. Volant d'inertie selon la revendication 2, **caractérisé en ce que** le grand foyer (11) de l'ellipse est centré sur le plan de symétrie (A) du vilebrequin (2).

4. Volant d'inertie selon la revendicat ion 1, **caractérisé en ce que** la tôle (9) est rigidifiée localement par des nervures (13).

5. Volant d'inertie selon la revendication 4, **caractérisé en ce que** les nervures (13) sont disposées dans la zone du plan (B) perpendiculaire au plan de symét rie (A) du vilebrequin (2).

6. Procédé de fabrication d'un volant conforme à l'une des revendications précédentes, **caractérisé en ce qu'**il comprend les étapes suivant es :
- réalisat ion de la tôle embout ie (9),
- soudage sur la tôle (9) du plateau de fixation (4) du volant sur le vilebrequin,
- insert ion de l'ensemble tôle et plateau soudé dans le moule du volant,
- coulée du volant,
- usi nage.

7. Procédé selon la revendication 6, **caractérisé en ce qu'**on réalise des nervures (13) dans la tôle lors de l'emboutissage.
